# EUROPÄISCHE PATENTSCHRIFT

(11) **EP 2 020 328 B1**
(45) Veröffentlichungstag und Bekanntmachung des Hinweises auf die Patenterteilung: **22.09.2010**
(21) Anmeldenummer: 08010006.8
(22) Anmeldetag: 31.05.2008
(51) Int. Cl.: B60K 15/05

(54) **Tankklappeneinheit**
Tank inlet cover device
Unité de trappe d'obturation de réservoir

(30) Priorität: 28.07.2007 DE 102007035491
(43) Veröffentlichungstag der Anmeldung: 04.02.2009
(73) Patentinhaber: GM Global Technology Operations, Inc., Detroit MI 48265-3 (US)
(72) Erfinder: Zentner, Christian, 65187 Wiesbaden (DE); Betzen, Heiko, 97285 Röttingen (DE)
(74) Vertreter: Strauss, Peter

(56) Entgegenhaltungen:
- EP-A- 1 571 029
- DE-A1- 2 059 439

## Beschreibung

Die Erfindung betrifft eine Tankklappeneinheit für ein Kraftfahrzeug mit einem zur Halterung einer Tankklappe ausgebildeten Scharnierarm, der um eine Schwenkachse verschwenkbar gelagert ist, einem zusammen mit der Tankklappe bewegten Verriegelungsabschnitt und einem Verriegelungselement, das zum Ver- und Entriegeln der Tankklappe durch eine Steuereinheit zwischen einer Verriegelungsposition, in der das Verriegelungselement in den Verriegelungsabschnitt eingreift, und einer Freigabeposition, in der das Verriegelungselement nicht in den Verriegelungsabschnitt eingreift, bewegbar ist.

Tankklappen dienen zum Abdecken der Öffnung in der Karosserie, in der sich der mit einem Tankdeckel verschließbare Tankeinfüllstutzen befindet. Bekannte Tankklappeneinheiten weisen eine Tankklappe auf, die aufschwenkbar ist. Zum Verriegeln der Tankklappe im geschlossenen Zustand kann an der Tankklappe bzw. an einem Scharnierarm, an dem die Tankklappe befestigt ist, ein Verriegelungsabschnitt vorgesehen sein, der nach innen von der Tankklappe vorsteht. In eine Öffnung in diesem Verriegelungsabschnitt kann im geschlossenen Zustand der Tankklappe ein als Verriegelungsstange ausgebildetes Verriegelungselement eingreifen, das mit Hilfe eines Stellmotors in eine Verriegelungsposition bewegt werden kann, in der sie in die Öffnung des Verriegelungsabschnitts eingreift. Der Stellmotor kann zum Beispiel durch die Zentralverriegelung des Fahrzeugs angesprochen werden. Zum Öffnen oder Schließen der Tankklappe wird die Verriegelungsstange durch den Stellmotor in eine Freigabeposition bewegt, in der die Verriegelungsstange nicht in den Verriegelungsabschnitt eingreift.

Die EP-A-1 571 029 A2 offenbart eine Tankklappenanordnung mit einem Muldenkörper und einer den Muldenkörper abdeckenden Klappe. Eine Verriegelungsanordnung ist vorgesehen, die zwischen einer Verriegelungsstellung und einer Freigabestellung hin- und herschaltbar ist. In der Freigabestellung kann die Klappe gegenüber dem Muldenkörper in eine geöffnete Position verschwenkt werden. Die Verriegelungsanordnung kann ein Hakenelement umfassen, welches in eine Öffnung eines Verriegelungsabschnitts der Klappe eingreift. Der Haken und der Verriegelungsabschnitt können Schrägflächen aufweisen, welche beim Schließen der Klappe aneinander entlanggleiten.

In der DE 20 59 439 A1 ist eine Schließvorrichtung für einen Gepäckraumdeckel und einen Tankklappenverschluss offenbart. Mittels eines Schließzylinders kann einerseits eine Hakenfalle für den Gepäckraumdeckel betätigt werden, andererseits kann eine die Tankklappe verriegelnde Schließstange in eine Freigabestellung gezogen werden.

Eine Tankklappeneinheit der eingangs genannten Art ist ferner aus EP 0 736 406 B1 bekannt.

Es ist die Aufgabe der vorliegenden Erfindung, eine Tankklappeneinheit anzugeben, die ein Schließen der Tankklappe unabhängig vom Verriegelungszustand ermöglicht.

Diese Aufgabe wird mit einer Tankklappeneinheit mit den Merkmalen des Anspruchs 1 gelöst. Vorteilhafte Ausgestaltungen sind Gegenstand von Unteransprüchen.

Bei der erfindungsgemäßen Tankklappeneinheit weisen das Verriegelungselement und/oder der Verriegelungsabschnitt eine angefaste Fläche auf. Bei einer Ausführungsform, bei der das Verriegelungselement eine angefaste Fläche aufweist, ist diese derart angeordnet, dass der mit der Tankklappe bewegte Verriegelungsabschnitt bei einer Schließbewegung der Tankklappe während eines Zustandes, in dem sich das Verriegelungselement in der Verriegelungsposition befindet, auf die angefaste Fläche trifft. Bei einer Ausführungsform, bei der der Verriegelungsabschnitt eine angefaste Fläche aufweist, ist diese derart angeordnet, dass sie bei einer Schließbewegung der Tankklappe während eines Zustands, indem sich das Verriegelungselement in der Verriegelungsposition befindet, auf das Verriegelungselement trifft. In beiden Fällen ist die angefaste Fläche derart ausgestaltet, dass bei einer Schließbewegung der Tankklappe während eines Zustandes, in dem sich das Verriegelungselement in der Verriegelungsposition befindet, das Verriegelungselement und der Verriegelungsabschnitt aneinander abgleiten.

Befindet sich das Verriegelungselement bei der erfindungsgemäßen Tankklappeneinheit in der Verriegelungsposition, obwohl die Tankklappe nicht geschlossen ist - also zum Beispiel wenn nach einem Tankvorgang die Zentralverriegelung betätigt wurde, obwohl die Tankklappe zuvor nicht geschlossen wurde - kann die Tankklappe dennoch nachträglich geschlossen werden. Bei der Schließbewegung der Tankklappe trifft dann die an dem Verriegelungsabschnitt vorgesehene angefaste Fläche auf das Verriegelungselement bzw. der Verriegelungsabschnitt auf die an dem Verriegelungselement vorgesehene angefaste Fläche, sodass das Verriegelungselement und der Verriegelungsabschnitt über die angefaste Fläche bzw. die angefasten Flächen aneinander abgleiten.

Ein weiterer Vorteil der Ausgestaltung mit angefasten Flächen liegt darin, dass bei der Montage der Tankklappeneinheit nicht darauf geachtet werden muss, ob sich das Verriegelungselement gerade in der Verriegelungsposition befindet oder nicht. Durch die angefaste Fläche bzw. die angefasten Flächen ist gewährleistet, dass das Verriegelungselement bei der Montage der Tankklappe bzw. des Scharnierarmes nicht abbrechen kann, wenn während eines Montageschrittes der Verriegelungsabschnitt auf das gegebenenfalls in der Verriegelungsposition befindliche Verriegelungselement trifft.

Grundsätzlich ist die Abgleitbewegung des Verriegelungselementes und des Verriegelungsabschnittes aneinander möglich, wenn eines dieser Elemente eine angefaste Fläche aufweist. Eine besonders sichere und glatte Abgleitbewegung wird erreicht, wenn sowohl das Verriegelungselement als auch der Verriegelungsabschnitt eine angefaste Fläche aufweisen.

Um die Abgleitbewegung zu ermöglichen, könnte zum Beispiel das Verriegelungselement oder der Verriegelungsabschnitt federnd gelagert sein. Bei einer einfachen und kostengünstigen Ausgestaltung ist entweder der Verriegelungsabschnitt oder das Verriegelungselement zumindest bereichsweise ausreichend elastisch, um ein Ausweichen während der Abgleitbewegung zu ermöglichen. Zum Beispiel könnte das Verriegelungselement zumindest bereichsweise derart elastisch ausgestaltet sein, dass es bei der Abgleitbewegung dem Verriegelungsabschnitt ohne zusätzliches Federelement ausweichen kann.

Erfindungsgemäß ist die Steuereinheit derart ausgestaltet, dass das Verriegelungselement bei der Abgleitbewegung zwischen Verriegelungselement und Verriegelungsabschnitt in die Freigabeposition bewegt wird, in der es dann verbleibt.. Umfasst die Steuereinheit zum Beispiel einen Elektromotor, so wird das Verriegelungselement zusammen mit den beweglichen Teilen des Elektromotors auf diese Weise in eine Position des nicht verriegelten Zustandes bewegt. Die Tankklappe lässt sich dann schließen. Eine erneute Verriegelung des Systems erfolgt erst wieder zum Beispiel beim erneuten Betätigen der Zentralverriegelung. Eine solche Ausführungsform ist hinsichtlich der Stabilität und der Führungsgenauigkeit des Verriegelungselementes von Vorteil. Nachdem in der Regel nach dem Schließen der Tankklappe das Kraftfahrzeug ohnehin geöffnet wird, um die Tankstelle zu verlassen, ist eine Verriegelung der Tankklappe nach dem Schließen nach einem Tankvorgang normalerweise auch nicht notwendig, da bei Betätigen der Zentralverriegelung zum Öffnen des Kraftfahrzeuges das Verriegelungselement ohnehin in der Regel die Freigabeposition einnimmt.

Vorzugsweise ist das Verriegelungselement zur kostengünstigen Herstellung aus Kunststoff gebildet.

Eine bevorzugte Ausführungsform sieht vor, dass das Verriegelungselement hakenförmig, insbesondere J-förmig ausgebildet ist. Durch die hakenförmige Ausbildung kann das Verriegelungselement sehr platzsparend an der Außenkontur der Tankklappeneinheit vorgesehen sein.

Insbesondere kann das Verriegelungselement einen an der Steuereinheit eingreifenden, langgestreckten Basisabschnitt, einen sich daran anschließenden gegenüber dem Basisabschnitt schräg bzw. quer verlaufenden Mittelabschnitt und einen sich daran anschließenden, zum Eingreifen in den Verriegelungsabschnitt ausgebildeten Endabschnitt umfassen, an dem bei der entsprechenden Ausführungsform die angefaste Fläche vorgesehen ist. Bevorzugt kann der Endabschnitt des Verriegelungselementes im Wesentlichen parallel und insbesondere entgegengesetzt zu dem Basisabschnitt verlaufen. Dadurch ist gewährleistet, dass bei einer axialen Verschiebung des Verriegelungselementes zwischen der Freigabeposition und der Verriegelungsposition durch die Steuereinheit auch der Endabschnitt eine entsprechend parallel versetzte, axiale Verschiebung durchführt.

Nach einer weiteren vorteilhaften Ausführungsform der Erfindung sind der Basisabschnitt und der Endabschnitt bei eingebauter Tankklappeneinheit im Wesentlichen horizontal angeordnet. Eine axiale Verschiebung des Verriegelungselementes entspricht damit ebenfalls einer im Wesentlichen horizontalen Verschiebung.

Bevorzugt sind der Basisabschnitt und der Endabschnitt bei eingebauter Tankklappeneinheit in vertikaler und horizontaler Richtung versetzt zueinander angeordnet. Der Mittelabschnitt kann dabei bogenförmig oder schräg zur geschlossenen Tankklappe verlaufend ausgebildet sein.

Eine kompakte Bauweise lässt sich erreichen, wenn die Bewegungsrichtung des Verriegelungselementes zwischen der Freigabeposition und der Verriegelungsposition im Wesentlichen senkrecht zur Schwenkachse der Tankklappe und/oder parallel zur Längsachse des Scharnierarms verläuft.

Zum Eingreifen des Verriegelungselementes in den Verriegelungsabschnitt sind korrespondierende Eingreifelemente vorgesehen. Besonders bevorzugt weist der Verriegelungsabschnitt einen in Richtung der Tanköffnung weisenden Ansatz an dem Scharnierarm oder der Tankklappe mit einer Öffnung auf, in die das Verriegelungselement in der Verriegelungsposition bei geschlossener Tankklappe eingreifen kann.

Die Tankklappeneinheit kann einen Muldenkörper aufweisen, an dem der Scharnierarm schwenkbar befestigt ist, wobei die Steuereinheit zur Bewegung des Verriegelungselementes an der Außenseite des Muldenkörpers im Bereich der Schwenkachse vorgesehen sein kann. Eine solche Ausgestaltung ist sehr kompakt und einfach einzubauen. Besonders einfach ist es dabei, wenn das Verriegelungselement den Muldenkörper umgreift.

Die Erfindung wird nachfolgend anhand eines Ausführungsbeispiels unter Bezugnahme auf die Figuren näher beschrieben. Dabei zeigen:
- Fig. 1: eine perspektivische Darstellung einer erfindungsgemäßen Tankklappeneinheit,
- Fig. 2: eine Rückansicht der Tankklappeneinheit nach Fig. 1,
- Fig. 3: eine teilweise aufgerissene Draufsicht auf die Tankklappeneinheit nach Fig. 1,
- Fig. 4: eine Seitenansicht der Tankklappeneinheit der Fig. 1, und
- Fig. 5: ein Detail der Tankklappeneinheit der Fig. 1 während einer Schließbewegung.

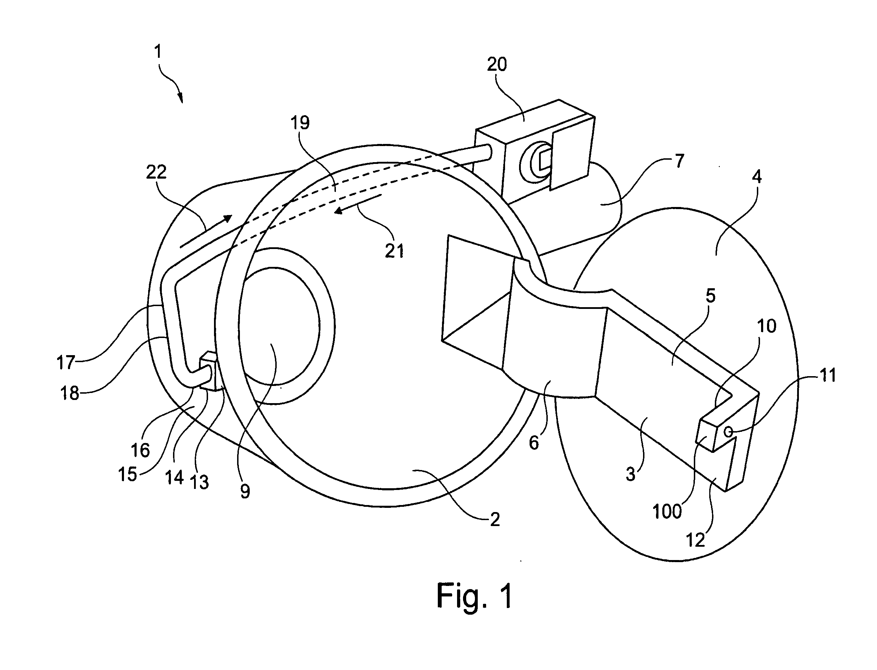

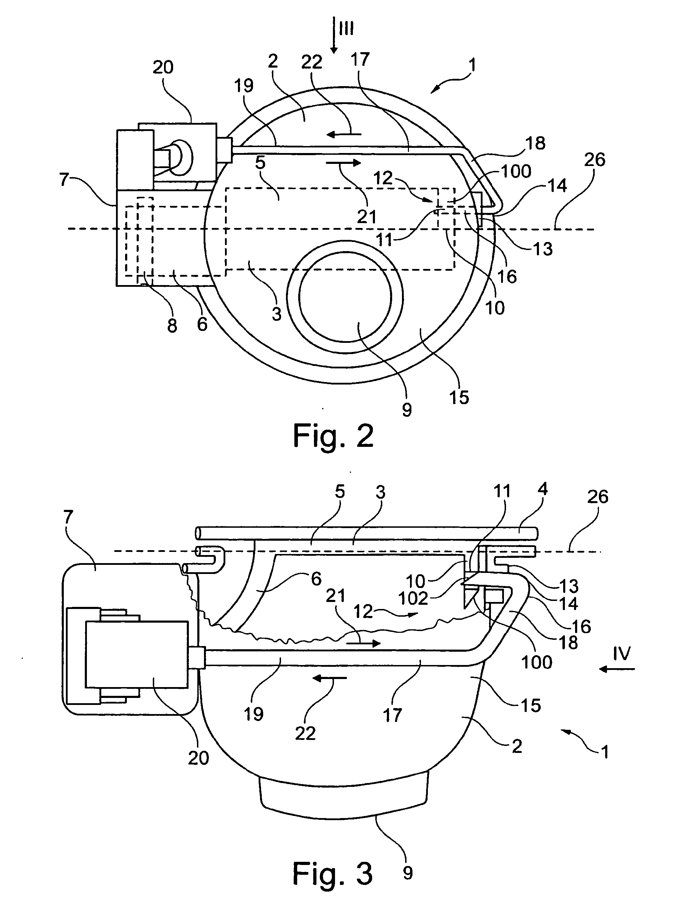

Fig. 1 zeigt die Tankklappeneinheit 1, die einen Muldenkörper 2 und einen verschwenkbar an den Muldenkörper 2 gelagerten Scharnierarm 3 umfasst, an dem eine hier geöffnet dargestellte Tankklappe 4 befestigt ist. Der Scharnierarm 3 umfasst einen länglichen Abschnitt 5, der zum Haltern der Tankklappe 4 ausgebildet ist, sowie einen sich daran anschließenden bogenförmigen Abschnitt 6, der in eine seitlich des Muldenkörpers 2 ausgebildete Gehäuseerweiterung 7 hineinragt und in dieser um eine Schwenkachse 8 (Fig. 2) verschwenkbar gelagert ist. Im rückwärtigen Bereich des Muldenkörpers 2 ist eine Öffnung 9 vorgesehen, die zur Aufnahme eines nicht dargestellten Tankeinfüllstutzens dient.

Im Bereich des freien Endes des Scharnierarms 3 ist ein Ansatz 10 mit einer Öffnung oder Bohrung 11 ausgebildet, die zusammen einen Verriegelungsabschnitt 12 bilden. An der der Tankklappe 4 abgewandten Stirnseite weist der Ansatz 10 eine angefaste Abschnittfläche 100 auf. Etwa gegenüber der Gehäuseerweiterung 7 ist an den Muldenkörper 2 ein Führungselement 13 mit einer Führungsöffnung 14 vorgesehen, welche die Wand 15 des Muldenkörpers 2 durchdringt. Der als Verriegelungszapfen ausgebildete Endabschnitt 16 eines hakenförmigen, aus Kunststoff gefertigten Verriegelungselementes 17 ist in der Führungsöffnung 14 geführt. An den Endabschnitt 16 des Verriegelungselementes 17 schließt sich ein Mittelabschnitt 18 und daran ein Basisabschnitt 19 des Verriegelungselementes 17 an, der mit einer an der Oberseite der Gehäuseerweiterung 7 angeordneten Steuereinheit 20 in Wirkverbindung steht. Mit der Steuereinheit 20, die beispielsweise als Stellmotor oder als Elektromagnet ausgebildet sein kann, kann das Verriegelungselement 17 in axialer Richtung, das heißt entlang des Pfeils 22 zur Steuereinheit hin, sowie entlang eines Pfeils 21 von der Steuereinheit 20 weg bewegt werden.

Fig. 2 zeigt die Tankklappeneinheit 1 in einer Rückansicht, wobei die Tankklappe 4 geschlossen ist. Die Blickrichtung ist von hinten auf den Muldenkörper 2, sodass das Verriegelungselement 17 sichtbar ist. Der Scharnierarm 3 ist vom Muldenkörper 2 verdeckt und insofern gestrichelt dargestellt. Zur Orientierung ist die Längsachse 26 des Scharnierarms eingetragen. In Fig. 2 ist - ebenfalls durch den Muldenkörper verdeckt und gestrichelt dargestellt - die Schwenkachse 8 gezeigt, um die der Schwenkarm 3 geschwenkt werden kann. In dem in Fig. 2 dargestellten geschlossenen und verriegelten Zustand der Tankklappe 4 greift der Endabschnitt 16 des Verriegelungselementes 17 durch die Bohrung 11 des Ansatzes 10 an dem Scharnierarm 3.

Fig. 3 zeigt eine Draufsicht von oben auf die Tankklappeneinheit 1 (entsprechend der Blickrichtung III, wie sie in Fig. 2 angegeben ist) in teilaufgerissener Ansicht. Auch hier ist die Tankklappe 4 geschlossen und verriegelt gezeigt. In dieser Ansicht erkennt man, wie der Endabschnitt 16 des Verriegelungselementes 17 durch die Bohrung 11 des Ansatzes 10 des Scharnierarms 3 greift. Am Ende des Endabschnitts 16 ist die angefaste Elementfläche 102 sichtbar.

Außerdem ist in dieser Ansicht gut zu erkennen, dass das Führungselement 13 mit der Führungsöffnung 14 so positioniert ist, dass bei verschlossener Tankklappe 4 die Führungsöffnung 14 mit der Bohrung 11 des Verriegelungsabschnittes 12 fluchtet, sodass der als Verriegelungszapfen ausgebildete Endabschnitt 16 des Verriegelungselementes 17 in die Bohrung 11 des Verriegelungsabschnittes 12 eingreifen kann und bei Verschieben des hakenförmigen Verriegelungselementes 17 in einer Richtung gemäß Pfeil 21 der Verriegelungszapfen 16 die Bohrung 11 des Verriegelungsabschnittes 12 verlässt.

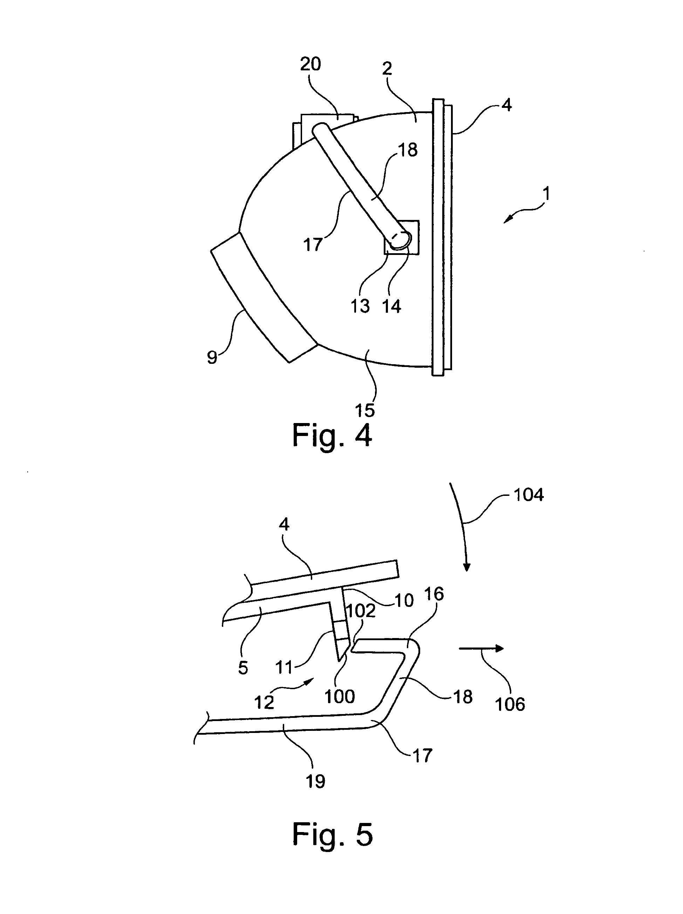

Fig. 4 zeigt eine seitliche Draufsicht auf die Tankklappeneinheit 1 mit geschlossener Tankklappe 4 entsprechend der Blickrichtung IV, wie sie in Fig. 3 angegeben ist. Insbesondere wird hier die schräge Anordnung des Mittelabschnitts 18 des Verriegelungselementes 17 deutlich.

Fig. 5 zeigt ein Detail der Tankklappeneinheit um das Zusammenwirken des Verriegelungselementes 17 mit dem Verriegelungsabschnitt 12 während einer Schließbewegung der Tankklappe 4 in Richtung des Pfeils 104 zu verdeutlichen, und zwar, wenn sich das Verriegelungselement 17 in der Verriegelungsposition befindet. Insbesondere ist erkennbar, wie das Verriegelungselement 17 durch das Aneinanderabgleiten der angefasten Fläche 100 des Verriegelungsabschnittes 12 und der angefasten Fläche 102 des Verriegelungselementes 17 in Richtung des Pfeiles 106 ausweicht.

Wie es insbesondere den Fig. 1 bis 4 zu entnehmen ist, umgreift das Verriegelungselement 17 aufgrund seiner hakenförmigen Ausbildung den Muldenkörper 2 in seinem rückwärtig gelegenen oberen Bereich, wobei aufgrund der hakenförmigen Ausbildung gewährleistet ist, dass eine Verschiebung des Basisabschnittes 19 des Verriegelungselementes in eine dazu entsprechende Verschiebung des Endabschnitts 16 umgesetzt wird.

Aus den Fig. 2 bis 4 ist weiter zu erkennen, dass sich der Mittelabschnitt 18 des Verriegelungselementes 17 von dem im Wesentlichen horizontal verlaufenden Basisabschnitt 19 schräg nach vorne unten und gleichzeitig nach vorne außen zum Endabschnitt 16 erstreckt, der wiederum im Wesentlichen horizontal durch die Führungsöffnung 14 in das Innere des Muldenkörpers hineinragt. Durch diese den Muldenkörper 2 in Teilbereichen umgreifende Ausbildung des Verriegelungselementes 17 ist es möglich, dass die Steuereinheit 20 platzsparend an der Ober- oder der Unterseite der Gehäuseerweiterung 7 vormontiert werden kann und ein Verriegeln der Tankklappe 4 im Bereich ihres von der Schwenkachse 8 abgewandten Endes möglich ist. Durch die umgreifende Ausgestaltung des Verriegelungselementes 17 wird die Außenabmessung der Tankklappeneinheit 1 kaum vergrößert. Die Tankklappeneinheit 1 kann zusammen mit der Steuereinheit 20 und dem Verriegelungselement 17 als vormontierte Baugruppe hergestellt werden, wobei durch die Anordnung der Steuereinheit 20 unmittelbar an der Gehäuseerweiterung 7 gewährleistet ist, dass sich die Tankklappeneinheit 1 ohne weiteres von außen durch eine entsprechende Aufnahmeöffnung in der Karosserie einsetzen lässt. Da die Gehäuseerweiterung 7 zusammen mit der Steuereinheit 20 an einer Seite der Tankklappeneinheit 1 angeordnet ist, kann zunächst diese seitlich überstehende Einheit bei schräggestellter Tankklappeneinheit 1 in die Aufnahmeöffnung eingeführt werden und anschließend durch Verkippen der Tankklappeneinheit 1 diese überstehende Einheit seitlich neben der Aufnahmeöffnung hinter dem Karosserieblech positioniert werden. Dadurch kann der Muldenkörper 2 vollständig in die Aufnahmeöffnung eingeschoben und darin befestigt werden.

Die erfindungsgemäße Tankklappeneinheit funktioniert wie folgt.

Ausgegangen wird zum Beispiel von einem Zustand, in dem die Tankklappe 4 geschlossen und verriegelt ist, also insbesondere der Endabschnitt 16 des Verriegelungselementes 17 durch die Bohrung 11 des Verriegelungsabschnittes 12 greift und so ein Öffnen der Tankklappe 4 um die Schwenkachse 8 herum nicht möglich ist. Zum Beispiel durch Betätigung der Zentralverriegelung wird die Steuereinheit 20 veranlasst, das Verriegelungselement 17 in Richtung des Pfeils 21 zu bewegen. Dadurch wird der Endabschnitt 16 des Verriegelungselementes 17 aus der Bohrung 11 des Verriegelungsabschnittes 12 herausbewegt, sodass der Verriegelungsabschnitt 12 frei ist. Ein Öffnen der Tankklappe 4 ist damit möglich. Zum Beispiel nach Durchführen eines Tankvorganges wird die Tankklappe 4 wieder um die Schwenkachse 8 herum geschlossen. Zum Beispiel durch Betätigung der Zentralverriegelung kann dann die Steuereinheit 20 veranlasst werden, das Verriegelungselement 17 in der Pfeilrichtung 22 zurückzuziehen, wodurch insbesondere auch der Endabschnitt 16 des Verriegelungselementes 17 durch die Bohrung 11 des Verriegelungsabschnittes 12 hindurchtritt und die Tankklappe 4 verriegelt. Ein Öffnen der Tankklappe 4 ist damit nicht mehr möglich. Das Eintreten des Endabschnittes 16 des Verriegelungselementes 17 in die Bohrung 11 des Verriegelungsabschnittes 12 wird dabei durch die angefaste Elementfläche 102 des Verriegelungselementes 17 erleichtert.

Es kann jedoch zum Beispiel passieren, dass der Fahrer des betankten Fahrzeuges die Zentralverriegelung 20 zum Verschließen betätigt, obwohl die Tankklappe 4 noch nicht geschlossen ist. Dennoch ist es mit der erfindungsgemäßen Tankklappeneinheit 1 möglich, die Tankklappe 4 nachträglich zu schließen, ohne die Zentralverriegelung noch einmal betätigen zu müssen.

Die Tankklappe 4 wird dabei in Richtung des Pfeiles 104 (Fig. 5) bewegt. Die angefaste Fläche 100 des Verriegelungsabschnittes 12 trifft auf die angefaste Fläche 102 des Endabschnittes 16 des Verriegelungselementes 17. Aufgrund der Anfasung der aufeinander treffenden Flächen 100, 102 wird das Verriegelungselement 17 in Richtung des Pfeiles 106 gedrängt, so dass der Endabschnitt 16 dem Verriegelungsabschnitt 12 ausweicht. Dabei bewegen sich die beweglichen Teile der Steuereinheit 20, die beispielsweise als Stellmotor oder als Elektromagnet ausgebildet ist, mit dem Verriegelungselement 17 mit.

Obwohl sich das Verriegelungselement 17 bereits in der Verriegelungsposition befindet, kann also die Tankklappe 4 geschlossen werden, ohne dass die Steuereinheit 20 zum Beispiel durch die Zentralverriegelung noch einmal betätigt werden muss.

Nachdem die Tankklappe auf diese Weise geschlossen wurde, befindet sich bei dieser Ausführungsform das Verriegelungselement 17 nicht in der Verriegelungsposition. Dies ist grundsätzlich auch nicht notwendig, da der Fahrer nach dem Tankvorgang ohnehin zum Besteigen des Kraftfahrzeuges die Zentralverriegelung zum Öffnen betätigen wird, um die verschlossene Kraftfahrzeugtür zu öffnen. Beim Betätigen der Zentralverriegelung zum Öffnen würde das Verriegelungselement 17 ohnehin in die Freigabeposition bewegt, in der der Endabschnitt 16 nicht in die Bohrung 11 im Verriegelungsabschnitt 12 eingreifen würde. In diesem Zustand wird die Tankklappe 4 durch an sich bekannte Rast- oder Schnappmechanismen gehalten ohne dass eine Verriegelung vorliegt, entsprechend einem Zustand, der im Normalfall bei geschlossener Tankklappe aber nicht verriegelter Zentralverriegelung vorliegt.

Bei anderen Ausgestaltungen kann das Verriegelungselement ausreichend elastisch ausgestaltet oder gelagert sein, um die Abgleitbewegung der angefasten Flächen 100, 102 zu ermöglichen.

Auch beim Einbau der Tankklappeneinheit 1 erweist sich die erfindungsgemäße Ausgestaltung mit angefasten Flächen am Verriegelungsabschnitt 12 und/oder am Endabschnitt 16 des Verriegelungselementes 17 als vorteilhaft.

Während des Einbaus ist die Steuereinheit 20 nicht notwendigerweise bereits elektrisch ansteuerbar. Um den Einbau möglichst einfach zu gestalten, sollte sich die Verriegelungseinheit 17 jedoch möglichst in der platzsparenden Verriegelungsposition befinden um ein einfaches Einsetzen in die Karosserie zu erleichtern. Um zum Beispiel die Öffnung 9 im Muldenkörper 2 optimal um den Tankeinfüllstutzen herum zu platzieren ist es jedoch vorteilhaft, wenn während des Einbaus die Tankklappe 4 auch geöffnet sein kann. Ohne angefaste Flächen an dem Verriegelungsabschnitt 12 bzw. am Endabschnitt 16 des Verriegelungselementes 17 wäre ein Schließen der Tankklappe im Anschluss an den Einbau jedoch erst dann wieder möglich, wenn auch die Steuereinheit 20 bereits ansteuerbar wäre, um das Verriegelungselement 17 aus der Verriegelungsposition herauszubewegen. Mit der erfindungsgemäßen Ausgestaltung kann die Tankklappe 4 jedoch nach dem Einbau der Tankklappeneinheit 1 im beschriebener Weise geschlossen werden, auch wenn das Verriegelungselement 17 in der platzsparenden Verriegelungsposition ist, ohne dass die Steuereinheit 20 angesteuert werden muss. Der Einbau der Tankklappeneinheit 1 wird dadurch signifikant erleichtert. Außerdem ist gewährleistet, dass während des Einbaus, während dessen in der Regel Kräfte aufgewendet werden müssen, ein Abbrechen des Verriegelungselements 17 verhindert werden kann, wenn zum Beispiel unbeabsichtigt die Tankklappe 4 geschlossen wird, obwohl sich das Verriegelungselement 17 in der Verriegelungsposition befindet.

### Bezugszeichenliste

- 1: Tankklappeneinheit
- 2: Muldenkörper
- 3: Scharnierarm
- 4: Tankklappe
- 5: länglicher Abschnitt des Scharnierarms
- 6: bogenförmiger Abschnitt des Scharnierarms
- 7: Gehäuseerweiterung
- 8: Schwenkachse
- 9: Öffnung im Muldenkörper
- 10: Ansatz
- 11: Bohrung im Verriegelungsabschnitt
- 12: Verriegelungsabschnitt
- 13: Führungselement
- 14: Führungsöffnung
- 15: Wand
- 16: Endabschnitt des Verriegelungselements
- 17: Verriegelungselement
- 18: Mittelabschnitt des Verriegelungselements
- 19: Basisabschnitt des Verriegelungselements
- 20: Steuereinheit
- 21, 22: Bewegungsrichtungen des Verriegelungselements
- 26: Längsachse des Scharnierarms
- 100: angefaste Abschnittfläche des Verriegelungsabschnitts
- 102: angefaste Elementfläche des Verriegelungselements
- 104: Schließbewegung der Tankklappe
- 106: Ausweichbewegung des Verriegelungselements

## Patentansprüche

1. Tankklappeneinheit für ein Kraftfahrzeug mit
- einem zur Halterung einer Tankklappe (4) ausgebildeten Scharnierarm (3), der um eine Schwenkachse (8) verschwenkbar gelagert ist,
- einem zusammen mit der Tankklappe bewegtem Verriegelungsabschnitt (12),
- einer Steuereinheit (20), und
- einem Verriegelungselement (17), das zum Ver- und Entriegeln der Tankklappe (4) durch die Steuereinheit (20) zwischen einer Verriegelungsposition, in der das Verriegelungselement (17) in den Verriegelungsabschnitt (12) eingreift, und einer Freigabeposition, in der das Verriegelungselement (17) nicht in den Verriegelungsabschnitt (12) eingreift, bewegbar ist, wobei
- das Verriegelungselement (17) eine angefaste Elementfläche (102) aufweist, die derart angeordnet ist, dass der Verriegelungsabschnitt (12) bei einer Schließbewegung (104) der Tankklappe (4) während eines Zustandes, in dem sich das Verriegelungselement (17) in der Verriegelungsposition befindet, auf die angefaste Elementfläche (102) trifft und/oder der Verriegelungsabschnitt (12) eine angefaste Abschnittfläche (100) aufweist, die derart angeordnet ist, dass sie bei einer Schließbewegung (104) der Tankklappe (4) während eines Zustandes, in dem sich das Verriegelungselement (17) in der Verriegelungsposition befindet, auf das Verriegelungselement (17) trifft, und
- die angefaste Fläche derart angeordnet ist bzw. die angefasten Flächen (100, 102) derart angeordnet sind, dass das Verriegelungselement (17) und der Verriegelungsabschnitt (12) bei einer Schließbewegung (104) der Tankklappe (4) während eines Zustandes, in dem sich das Verriegelungselement (17) in der Verriegelungsposition befindet, aneinander abgleiten,
**dadurch gekennzeichnet, dass**
die Steuereinheit (20) derart ausgestaltet ist, dass sie bei einer Schließbewegung (104) der Tankklappe (4) während eines Zustandes, in dem sich das Verriegelungselement (17) in der Verriegelungsposition befindet, die von der Abgleitbewegung (106) zwischen Verriegelungselement (17) und Verriegelungsabschnitt (12) hervorgerufene Bewegung des Verriegelungselementes (17) in die Freigabeposition zulässt, in der es dann verbleibt.

2. Tankklappeneinheit nach Anspruch 1, **dadurch gekennzeichnet, dass** das Verriegelungselement (17) aus Kunststoff gefertigt ist.

3. Tankklappeneinheit nach einem der vorhergehenden Ansprüche, **dadurch gekennzeichnet, dass** das Verriegelungselement (17) hakenförmig, insbesondere J-förmig, ausgebildet ist.

4. Tankklappeneinheit nach einem der vorhergehenden Ansprüche, **dadurch gekennzeichnet, dass** das Verriegelungselement (17) einen an der Steuereinheit (20) angreifenden, lang gestreckten Basisabschnitt (19), einen sich daran anschließenden, gegenüber dem Basisabschnitt (19) schräg bzw. quer verlaufenden Mittelabschnitt (18) sowie einen sich daran anschließenden, zum Eingreifen in den Verriegelungsabschnitt (12) ausgebildeten Endabschnitt (16) umfasst.

5. Tankklappeneinheit nach Anspruch 4, **dadurch gekennzeichnet, dass** der Endabschnitt (16) des Verriegelungselements (17) im Wesentlichen parallel und insbesondere entgegengesetzt zu dem Basisabschnitt (19) verläuft.

6. Tankklappeneinheit nach einem der Ansprüche 4 oder 5, **dadurch gekennzeichnet, dass** der Basisabschnitt (19) und der Endabschnitt (16) bei eingebauter Tankklappeneinheit (1) im Wesentlichen horizontal angeordnet sind.

7. Tankklappeneinheit nach einem der Ansprüche 4 bis 6, **dadurch gekennzeichnet, dass** der Basisabschnitt (19) und der Endabschnitt (16) bei eingebauter Tankklappeneinheit (1) in vertikaler und horizontaler Richtung versetzt zueinander angeordnet sind.

8. Tankklappeneinheit nach einem der vorhergehenden Ansprüche, **dadurch gekennzeichnet, dass** der Verriegelungsabschnitt (12) einen in Richtung der Tanköffnung weisenden Ansatz (10) an dem Scharnierarm (3) oder der Tankklappe (4) mit einer Öffnung (11) aufweist, in die das Verriegelungselement (17) in der Verriegelungsposition bei geschlossener Tankklappe (4) eingreifen kann.

9. Tankklappeneinheit nach einem der vorhergehenden Ansprüche, **gekennzeichnet durch** einen Muldenkörper (2), an dem der Scharnierarm (3) schwenkbar befestigt ist.

10. Tankklappeneinheit nach Anspruch 9, **dadurch gekennzeichnet, dass** die Steuereinheit (20) an der Außenseite des Muldenkörpers (2) im Bereich der Schwenkachse (8) angeordnet ist.

11. Tankklappeneinheit nach einem der Ansprüche 9 oder 10, **dadurch gekennzeichnet**, und dass das Verriegelungselement (17) den Muldenkörper (2) zumindest bereichsweise umgreift.

## Claims

1. A fuel tank cover unit for a motor vehicle, comprising
- a hinge arm (3) which is arranged for holding a fuel tank cover (4) and is swivellably mounted about a swivel axis (8);
- a locking section (12) moved together with the fuel tank cover ;
- a control unit (20), and
- a locking element (17) which is movable for locking and unlocking the fuel tank cover (4) by the control unit (20) between a locking position in which the locking element (17) engages in the locking section (12) and a release position in which the locking element (17) does not engage in the locking section (12), with
- the locking element (17) having a chamfered element area (102) which is arranged in such a way that the locking section (12) meets the chamfered element area (102) during a closing movement (104) of the fuel tank cover (4) during a state in which the locking element (17) is disposed in the locking position and/or the locking section (12) comprises a chamfered section area (100) which is arranged in such a way that it meets the locking element (17) during a closing movement (104) of the fuel tank cover (4) during a state in which the locking element (17) is disposed in the locking position, and
- the chamfered area is arranged in such a way or the chamfered areas (100, 102) are arranged in such a way that the locking element (17) and the locking section (12) slide off one another in a closing movement (104) of the fuel tank cover (4) during a state in which the locking element (17) is disposed in the locking position,
**characterized in that** the control unit (20) is arranged in such a way that it permits the movement of the locking element (17) to the release position in which it then remains, which movement is caused by the slide-off motion (106) between the locking element (17) and the locking section (12) in a closing movement (104) of the fuel tank cover (4) during a state in which the locking element (17) is disposed in the locking position.

2. A fuel tank cover unit according to claim 1, **characterized in that** the locking element (17) is made of plastic.

3. A fuel tank cover unit according to one of the preceding claims, **characterized in that** the locking element (17) is arranged to be hook-like, especially J-like.

4. A fuel tank cover unit according to one of the preceding claims, **characterized in that** the locking element (17) comprise an elongated base section (19) which acts upon the locking element (17), an adjacent middle section (18) which extends in an oblique or transversal manner in relation to the base section (19, and an adjacent end section (16) which is arranged for engaging in the locking section (12).

5. A fuel tank cover unit according to claim 4, **characterized in that** the end section (16) of the locking element (17) extends substantially parallel and especially in opposite direction to the base section (19).

6. A fuel tank cover unit according to one of the claims 4 or 5, **characterized in that** the base section (19) and the end section (16) are arranged in a substantially horizontal manner when the fuel tank cover unit (1) is installed.

7. A fuel tank cover unit according to one of the claims 4 to 6, **characterized in that** the base section (19) and the end section (16) are arranged in an offset manner in relation to one another in the horizontal and vertical direction with mounted fuel tank cover unit (1).

8. A fuel tank cover unit according to one of the preceding claims, **characterized in that** the locking section (12) comprises a nose (10) on the hinge arm (3) or fuel tank cover (4), which nose faces in the direction of the tank opening and comprises an opening (11) in which the locking element (17) can engage in the locking position when the fuel tank cover (4) is closed.

9. A fuel tank cover unit according to one of the preceding claims, **characterized by** a trough body (2) to which the hinge arm (3) is fastened in a swivelable manner.

10. A fuel tank cover unit according to claim 9, **characterized in that** the control unit (20) is arranged on the outside of the trough body (2) in the region of the swivel axis (8).

11. A fuel tank cover unit according to one of the claims 9 or 10, **characterized in that** the locking element (17) encompasses the trough body (2) at least in sections.

## Revendications

1. Unité de trappe de réservoir pour un véhicule à moteur
- avec un bras de charnière (3) conçu pour retenir une trappe de réservoir (4), qui est supporté de façon pivotante autour d'un axe de pivotement (8),
- une partie de verrouillage (12) qui se déplace en même temps que la trappe de réservoir,
- une unité de commande (20) et
- un élément de verrouillage (17) qui peut être déplacé par l'unité de commande (20), pour verrouiller et déverrouiller la trappe de réservoir (4), entre une position de verrouillage dans laquelle l'élément de verrouillage (17) se met en prise dans la partie de verrouillage (12) et une position de déblocage dans laquelle l'élément de verrouillage (17) ne se met pas en prise dans la partie de verrouillage (12),
dans laquelle
- l'élément de verrouillage (17) présente une surface d'élément biseautée (102) qui est disposée de telle façon que la partie de verrouillage (12) atteigne la surface d'élément biseautée (102) lors d'un mouvement de fermeture (104) de la trappe de réservoir (4) pendant un état dans lequel l'élément de verrouillage (17) se trouve dans la position de verrouillage et/ou la partie de verrouillage (12) présente une surface de partie biseautée (100) qui est disposée de telle façon qu'elle vienne sur l'élément de verrouillage (17) lors d'un mouvement de fermeture (104) de la trappe de réservoir (4) pendant un état dans lequel l'élément de verrouillage (17) se trouve dans la position de verrouillage, et
- la surface biseautée est disposée ou les surfaces biseautées (100, 102) sont disposées de telle façon que l'élément de verrouillage (17) et la partie de verrouillage (12) glissent l'un sur l'autre lors d'un mouvement de fermeture (104) de la trappe de réservoir (4) pendant un état dans lequel l'élément de verrouillage (17) se trouve dans la position de verrouillage,
**caractérisée en ce que** l'unité de commande (20) est conformée de telle sorte que lors d'un mouvement de fermeture (104) de la trappe de réservoir (4), pendant un état dans lequel l'élément de verrouillage (17) se trouve dans la position de verrouillage, elle autorise le mouvement de l'élément de verrouillage (17), provoqué par le mouvement de glissement (106) entre l'élément de verrouillage (17) et la partie de verrouillage (12), vers la position de déblocage dans laquelle il reste ensuite.

2. Unité de trappe de réservoir selon la revendication 1, **caractérisée en ce que** l'élément de verrouillage (17) est fait de matière plastique.

3. Unité de trappe de réservoir selon l'une des revendications précédentes, **caractérisée en ce que** l'élément de verrouillage (17) est en forme de crochet, en particulier en forme de J.

4. Unité de trappe de réservoir selon l'une des revendications précédentes, **caractérisée en ce que** l'élément de verrouillage (17) présente une partie de base (19) allongée se mettant en prise sur l'unité de commande (20), une partie médiane (18) lui faisant suite et s'étendant en oblique ou transversalement par rapport à la partie de base (19) et une partie d'extrémité (16) faisant suite à celle-ci et conçue pour se mettre en prise dans la partie de verrouillage (12).

5. Unité de trappe de réservoir selon la revendication 4, **caractérisée en ce que** la partie d'extrémité (16) de l'élément de verrouillage (17) est sensiblement parallèle à la partie de base (19) et en particulier dirigée en sens inverse de celle-ci.

6. Unité de trappe de réservoir selon l'une des revendications 4 ou 5, **caractérisée en ce que** la partie de base (19) et la partie d'extrémité (16) sont disposées sensiblement à l'horizontale quand l'unité de trappe de réservoir (1) est montée en place.

7. Unité de trappe de réservoir selon l'une des revendications 4 à 6, **caractérisée en ce que** la partie de base (19) et la partie d'extrémité (16) sont disposées dans une direction opposée l'une à l'autre dans le sens vertical et horizontal quand l'unité de trappe de réservoir (1) est montée en place.

8. Unité de trappe de réservoir selon l'une des revendications précédentes, **caractérisée en ce que** la partie de verrouillage (12) présente un épaulement (10) dirigé vers l'ouverture du réservoir sur le bras de charnière (3) ou la trappe de réservoir (4) avec une ouverture (11) dans laquelle l'élément de verrouillage (17) peut se mettre en prise dans la position de verrouillage quand la trappe de réservoir (4) est fermée.

9. Unité de trappe de réservoir selon l'une des revendications précédentes, **caractérisé en ce qu'**il comporte un élément en forme de cuvette (2) sur lequel le bras de charnière (3) est fixé de façon pivotante.

10. Unité de trappe de réservoir selon la revendication 9, **caractérisée en ce que** l'unité de commande (20) est disposée sur la face extérieure de l'élément en forme de cuvette (2) au niveau de l'axe de pivotement (8).

11. Unité de trappe de réservoir selon l'une des revendications 9 ou 10, **caractérisée en ce que** l'élément de verrouillage (17) entoure au moins en partie l'élément en forme de cuvette (2).
